# FASCICULE DE BREVET EUROPEEN

(11) **EP 4 308 391 B1**
(45) Date de publication et mention de la délivrance du brevet: **20.11.2024**
(21) Numéro de dépôt: 22709351.5
(22) Date de dépôt: 01.02.2022
(51) Int. Cl.: B60H 1/00

(54) **VÉHICULE**
FAHRZEUG
VEHICLE

(30) Priorité: 18.03.2021 FR 2102727
(43) Date de publication de la demande: 24.01.2024
(73) Titulaire: Stellantis Auto SAS, 78300 Poissy (FR)
(72) Inventeur: LAURENT, Sebastien, 78690 LES ESSARTS LE ROI (FR)
(86) Numéro de dépôt international: PCT/FR2022/050180
(87) Numéro de publication internationale: WO 2022/195180

(56) Documents cités:
- FR-A1- 3 013 284
- JP-A- H0 976 839
- US-A1- 2020 101 973

## Description

La présente invention revendique la priorité de la demande française N°2102727 déposée le 18.03.2021.

### Domaine technique de l'invention

L'invention concerne un dispositif de gestion pour un véhicule comprenant un groupe motopropulseur, au moins partiellement électrique.

### Etat de la technique

Les documents US 2020/101973 A1, FR 3013284 A1 et JP H0976839 A décrivent des véhicules comprenant d'équipements électriques et des dispositifs de contrôle destiné à contrôler l'alimentation en énergie électrique desdits équipements électriques. De plus, comme le sait l'homme de l'art, certains véhicules comprennent un habitacle, recevant de l'air qui a été traité par une installation de chauffage et/ou climatisation, et un groupe motopropulseur (ou GMP), au moins partiellement électrique (c'est-à-dire tout électrique ou hybride (thermique/électrique)). Ce GMP comprend généralement des organes électriques associés à un premier système de refroidissement et consommant de l'énergie électrique stockée dans une batterie de type basse, moyenne ou haute tension et associée à un second système de refroidissement. Par exemple, ces organes électriques peuvent être une (des) machine(s) motrice(s) électrique(s), un (des) onduleur(s) et un (des) générateur(s) d'énergie électrique (comme par exemple un convertisseur de type courant continu/courant continu (ou DC/DC) et un éventuel alternateur ou un alterno-démarreur lorsque le GMP comprend aussi une machine motrice thermique).

Dans ce type de véhicule au moins deux modes d'alimentation électrique différents peuvent être instaurés en fonction des besoins électriques des premier et second systèmes de refroidissement et de l'installation de chauffage et/ou climatisation à l'instant considéré. Par exemple, ces modes d'alimentation électrique peuvent être choisis dans un groupe comprenant un premier mode d'alimentation électrique privilégiant la visibilité dans l'habitacle pour la sécurité du roulage du véhicule, un deuxième mode d'alimentation électrique privilégiant la durée de vie des organes électriques et de la batterie, un troisième mode d'alimentation électrique privilégiant le refroidissement des organes électriques, et un quatrième mode d'alimentation électrique privilégiant le confort aérothermique dans l'habitacle.

C'est un dispositif de gestion qui est chargé de déterminer en fonction des besoins électriques précités le prochain mode d'alimentation électrique à instaurer en remplacement de l'actuel mode d'alimentation électrique instauré. Dans un véhicule, les différents modes d'alimentation électrique ont des niveaux de priorité différents. On comprendra en effet, par exemple, que le premier mode d'alimentation électrique (« sécuritaire ») est plus prioritaire que le troisième mode d'alimentation électrique (« thermique GMP ») et donc lorsque le prochain mode d'alimentation électrique est ce premier mode d'alimentation électrique, il faut procéder à son instauration le plus rapidement possible. Dans certains véhicules, lorsque le dispositif de gestion a déterminé un prochain mode d'alimentation électrique à instaurer en fonction des besoins électriques, il instaure ce prochain mode d'alimentation électrique après un intervalle de temps dit « de confirmation » pour se laisser la possibilité de modifier son choix de prochain mode d'alimentation électrique au cas où les besoins électriques changeraient subitement. Or, actuellement, cet intervalle de temps de confirmation est constant quels que soient les actuel et prochain modes d'alimentation électrique, ce qui peut poser des problèmes dans certaines situations.

L'invention a donc notamment pour but d'améliorer la situation.

### Présentation de l'invention

Elle propose notamment à cet effet un dispositif de gestion destiné à équiper un véhicule comprenant un habitacle, recevant de l'air traité par une installation de chauffage et/ou climatisation, et un groupe motopropulseur, au moins partiellement électrique et comportant des organes électriques associés à un premier système de refroidissement et consommant de l'énergie électrique stockée dans une batterie associée à un second système de refroidissement, et dans lequel peuvent être instaurés au moins deux modes d'alimentation électrique différents en fonction de besoins électriques des premier et second systèmes de refroidissement et de l'installation de chauffage et/ou climatisation.

Ce dispositif de gestion se caractérise par le fait qu'il comprend au moins un processeur et au moins une mémoire agencés pour effectuer les opérations consistant à déterminer en fonction de ces besoins électriques un prochain mode d'alimentation électrique à instaurer en remplacement d'un actuel mode d'alimentation électrique instauré, puis une durée de transition à imposer avant d'instaurer ce prochain mode d'alimentation électrique déterminé, en fonction de niveaux de priorité qui sont respectivement associés à ces actuel et prochain modes d'alimentation électrique.

La durée de transition, devant être instaurée avant l'instauration du prochain mode d'alimentation électrique, variant désormais spécifiquement en fonction de la transition devant se produire entre l'actuel mode d'alimentation électrique et ce prochain mode d'alimentation électrique, on peut donc tenir compte des niveaux de priorité différents des différents modes d'alimentation électrique pouvant être instaurés dans le véhicule.

Le dispositif de gestion selon l'invention peut comporter d'autres caractéristiques qui peuvent être prises séparément ou en combinaison, et notamment :
- son processeur et sa mémoire peuvent être agencés pour effectuer les opérations consistant à prendre en compte quatre modes d'alimentation électrique différents associés respectivement à quatre niveaux de priorité différents ;
- en présence de la dernière option, son processeur et sa mémoire peuvent être agencés pour effectuer les opérations consistant à déterminer les modes d'alimentation électrique dans un groupe comprenant un premier mode d'alimentation électrique privilégiant une visibilité dans l'habitacle pour la sécurité du roulage du véhicule et associé à un premier niveau de priorité maximal, un deuxième mode d'alimentation électrique privilégiant une durée de vie des organes électriques et de la batterie et associé à un deuxième niveau de priorité inférieur au premier niveau de priorité, un troisième mode d'alimentation électrique privilégiant un refroidissement des organes électriques et associé à un troisième niveau de priorité inférieur au deuxième niveau de priorité, et un quatrième mode d'alimentation électrique privilégiant un confort aérothermique dans l'habitacle et associé à un quatrième niveau de priorité minimal et inférieur au troisième niveau de priorité;
- en présence de la dernière sous-option, son processeur et sa mémoire peuvent être agencés pour effectuer les opérations consistant à déterminer parmi les besoins électriques des premier et second systèmes de refroidissement celui qui est le plus important et est ci-après appelé besoin électrique intermédiaire, puis à déterminer parmi les deuxième, troisième et quatrième modes d'alimentation électrique celui qui peut être instauré en présence du besoin électrique intermédiaire et est ci-après appelé mode intermédiaire, puis à déterminer parmi le premier mode d'alimentation électrique et le mode intermédiaire déterminé celui qui peut être instauré en présence du besoin électrique de l'installation de chauffage et/ou climatisation et qui est le prochain mode d'alimentation électrique ;
- plus le niveau de priorité du prochain mode d'alimentation électrique est élevé, plus la durée de transition qui va précéder ce dernier est courte ;
- plus le niveau de priorité de l'actuel mode d'alimentation électrique est élevé, plus la durée de transition qui va précéder le prochain mode d'alimentation électrique est longue ;
- son processeur et sa mémoire peuvent être agencés pour effectuer les opérations consistant à déterminer la durée de transition dans une table de correspondance établissant une correspondance entre des couples d'actuel mode d'alimentation électrique et de prochain mode d'alimentation électrique et des durées de transition.

L'invention propose également un véhicule, éventuellement de type automobile, et, d'une part, comprenant un dispositif de gestion du type de celui présenté ci-avant, un habitacle recevant de l'air traité par une installation de chauffage et/ou climatisation, et un groupe motopropulseur au moins partiellement électrique et comportant des organes électriques associés à un premier système de refroidissement et consommant de l'énergie électrique stockée dans une batterie associée à un second système de refroidissement, et, d'autre part, dans lequel peuvent être instaurés au moins deux modes d'alimentation électrique différents en fonction de besoins électriques des premier et second systèmes de refroidissement et de l'installation de chauffage et/ou climatisation.

L'invention propose également un procédé de gestion destiné à être mis en oeuvre dans un véhicule comprenant un habitacle, recevant de l'air traité par une installation de chauffage et/ou climatisation, et un groupe motopropulseur, au moins partiellement électrique et comportant des organes électriques associés à un premier système de refroidissement et consommant de l'énergie électrique stockée dans une batterie associée à un second système de refroidissement, et dans lequel peuvent être instaurés au moins deux modes d'alimentation électrique différents en fonction de besoins électriques de ces premier et second systèmes de refroidissement et de l'installation de chauffage et/ou climatisation.

Ce procédé de gestion se caractérise par le fait qu'il comprend une étape dans laquelle on détermine en fonction des besoins électriques un prochain mode d'alimentation électrique à instaurer en remplacement d'un actuel mode d'alimentation électrique instauré, puis on détermine une durée de transition à imposer avant d'instaurer ce prochain mode d'alimentation électrique déterminé en fonction de niveaux de priorité qui sont respectivement associés à ces actuel et prochain modes d'alimentation électrique.

L'invention propose également un produit programme d'ordinateur comprenant un jeu d'instructions qui, lorsqu'il est exécuté par des moyens de traitement, est propre à mettre en oeuvre un procédé de gestion du type de celui présenté ci-avant pour gérer l'instauration d'au moins deux modes d'alimentation électrique différents dans un véhicule comprenant un habitacle, recevant de l'air traité par une installation de chauffage et/ou climatisation, et un groupe motopropulseur, au moins partiellement électrique et comportant des organes électriques associés à un premier système de refroidissement et consommant de l'énergie électrique stockée dans une batterie associée à un second système de refroidissement.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un véhicule comprenant un GMP purement électrique et un dispositif de gestion selon l'invention,
[Fig. 2] illustre schématiquement et fonctionnellement un exemple de réalisation d'un calculateur de supervision de l'alimentation électrique comprenant un exemple de réalisation d'un dispositif de gestion selon l'invention,
[Fig. 3] illustre schématiquement dans un diagramme un exemple d'évolution temporelle de modes d'alimentation électrique déterminés grâce à la mise en oeuvre de l'invention,
[Fig. 4] illustre schématiquement et fonctionnellement un exemple de décomposition en sous-modules fonctionnels des opérations réalisées par le dispositif de gestion selon l'invention, et
[Fig. 5] illustre schématiquement un exemple d'algorithme mettant en oeuvre un procédé de gestion selon l'invention.

### Description détaillée de l'invention

L'invention a notamment pour but de proposer un dispositif de gestion DG, et un procédé de gestion associé, destinés à permettre la gestion des modes d'alimentation électrique au sein d'un véhicule V à groupe motopropulseur (ou GMP) au moins partiellement électrique.

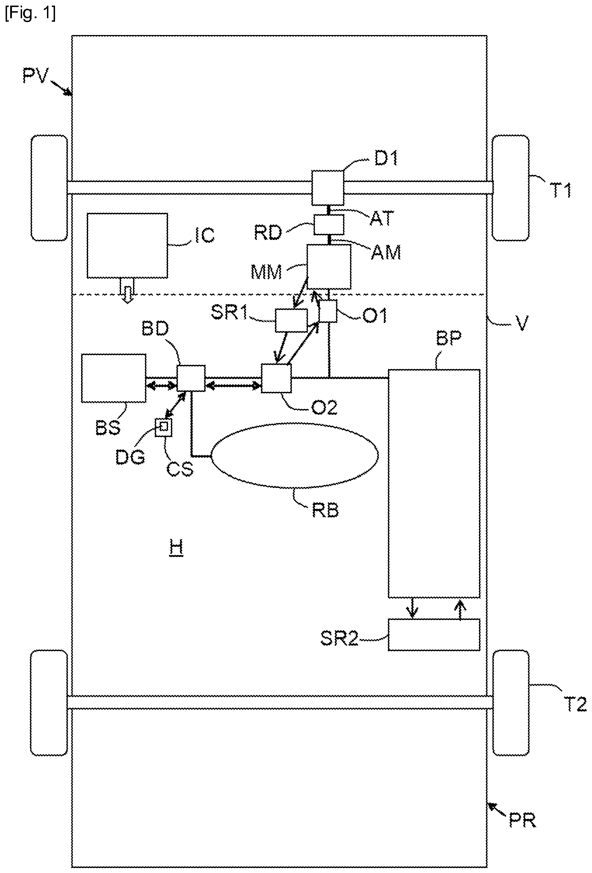

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule comprenant un GMP au moins partiellement électrique et un habitacle recevant de l'air traité par une installation de chauffage et/ou climatisation. Ainsi, elle concerne, par exemple, les véhicules terrestres (véhicules utilitaires, camping-cars, minibus, cars, camions, engins de voirie, engins de chantier, engins agricoles, et engins à chenille(s), par exemple), les bateaux et les aéronefs.

Comme illustré non limitativement sur la figure 1, un véhicule V selon l'invention comprend au moins un habitacle H associé à une installation de chauffage et/ou climatisation IC, une chaîne de transmission à groupe motopropulseur au moins partiellement électrique et comportant des organes électriques Oj associés à un premier système de refroidissement SR1 et consommant de l'énergie électrique stockée dans une batterie principale BP associée à un second système de refroidissement SR2, et un dispositif de gestion DG.

On considère dans ce qui suit, à titre d'exemple non limitatif, que l'installation de chauffage et/ou climatisation IC, qui est chargée d'alimenter en air traité l'habitacle H, est une installation de chauffage et de climatisation. Mais il pourrait s'agir d'une simple installation de chauffage ou d'une simple installation de climatisation.

Dans l'exemple illustré sur la figure 1, le véhicule a une chaîne de transmission à GMP purement électrique et donc comprend, notamment, au moins une machine motrice MM électrique, des organes électriques Oj, un arbre moteur AM, une batterie principale BP et un arbre de transmission AT. Mais comme évoqué plus haut, le GMP pourrait être hybride (thermique/électrique).

On entend ici par « machine motrice électrique » une machine électrique agencée de manière à fournir ou récupérer du couple pour déplacer le véhicule V.

La machine motrice MM (ici un moteur électrique) est couplée, via un premier organe électrique O1 (j = 1), à la batterie principale BP, afin d'être alimentée en énergie électrique, ainsi qu'éventuellement d'alimenter cette batterie principale BP en énergie électrique. Elle est couplée à l'arbre moteur AM, pour lui fournir du couple par entraînement en rotation. Cet arbre moteur AM est ici couplé à un réducteur RD qui est aussi couplé à l'arbre de transmission AT, lui-même couplé à un premier train T1 (ici de roues), de préférence via un différentiel D1.

Ce premier train T1 est ici situé dans la partie avant PV du véhicule V. Mais dans une variante ce premier train T1 pourrait être celui qui est ici référencé T2 et qui est situé dans la partie arrière PR du véhicule V.

Par exemple, le premier organe électrique O1 peut être un onduleur.

Egalement par exemple, la batterie principale BP peut être de type basse tension (typiquement 400 V à titre illustratif). Mais elle pourrait être de type moyenne tension ou haute tension.

La machine motrice MM est aussi couplée à un second organe électrique O2 (j = 2) qui est un générateur d'énergie électrique agencé sous la forme d'un convertisseur de type courant continu/courant continu (ou DC/DC) et qui est aussi couplé (ici indirectement) à une batterie de servitude BS, notamment pour la recharger avec de l'énergie électrique issue de la batterie principale BP et convertie. Outre la recharge de la batterie de servitude BS, ce convertisseur O2 est aussi chargé d'alimenter un réseau de bord RB en énergie électrique issue de la batterie principale BP et convertie. On notera que lorsque le GMP est hybride, les organes électriques Oj comprennent aussi un autre générateur d'énergie électrique agencé sous la forme d'un démarreur ou d'un alterno-démarreur.

La batterie de servitude BS est chargée de fournir de l'énergie électrique au réseau de bord RB, en complément de celle fournie par la batterie principale BP. Par exemple, cette batterie de servitude BS peut être agencée sous la forme d'une batterie de type très basse tension (typiquement 12 V, 24 V ou 48 V).

Le réseau de bord RB est un réseau d'alimentation électrique qui comprend des équipements (ou organes) électriques (ou électroniques) qui consomment de l'énergie électrique. Chacun de ces équipements (ou organes) électriques (ou électroniques) est soit « non prioritaire », soit « sécuritaire » (et donc prioritaire). On entend ici par « équipement (ou organe) sécuritaire » un équipement (ou organe) consommant de l'énergie électrique pour assurer au moins une fonction dite sécuritaire (car concernant la sécurité des passagers du véhicule V), et donc devant être alimenté en énergie électrique de façon prioritaire. Il pourra s'agir, par exemple, de la direction assistée électrique ou d'un dispositif de freinage électrique (frein de service, frein de secours, système d'aide au freinage ou anti-patinage, par exemple). Un équipement (ou organe) électrique (ou électronique) non prioritaire consomme de l'énergie électrique pour assurer au moins une fonction qui n'est pas indispensable, comme par exemple le chauffage/climatisation ou le chauffage de siège ou le dispositif de massage de siège.

On notera que dans l'exemple illustré non limitativement sur la figure 1 le véhicule V comprend un boîtier de distribution BD auquel sont couplés la batterie de servitude BS, le convertisseur O2 et le réseau de bord RB. Ce boîtier de distribution BD est chargé de distribuer dans le réseau de bord RB l'énergie électrique stockée dans la batterie de servitude BS ou produite par le convertisseur 02, pour l'alimentation des organes (ou équipements) électriques en fonction de demandes d'alimentation reçues. La supervision de l'alimentation électrique (et notamment de la distribution précitée) peut être assurée par un calculateur CS. Dans l'exemple illustré non limitativement sur la figure 1, le calculateur de supervision CS ne fait pas partie du boîtier de distribution BD. Mais dans une variante de réalisation (non illustrée) le calculateur de supervision CS pourrait faire partie du boîtier de distribution BD. Le calculateur de supervision CS est aussi, de préférence, chargé de superviser l'instauration d'un mode d'alimentation électrique déterminé par le dispositif de gestion DG selon l'invention parmi au moins deux modes d'alimentation électrique différents en fonction des besoins électriques bk des premier SR1 et second SR2 systèmes de refroidissement et de l'installation (de chauffage et/ou climatisation) IC.

Dans ce qui suit, on désigne par :
- b1 (k = 1) le besoin, à l'instant considéré, d'énergie électrique pour que le premier système de refroidissement SR1 puisse refroidir la (chaque) machine motrice MM (électrique),
- b2 (k = 2) le besoin, à l'instant considéré, d'énergie électrique pour que le premier système de refroidissement SR1 puisse refroidir le convertisseur O2,
- b3 (k = 3) le besoin, à l'instant considéré, d'énergie électrique pour que le premier système de refroidissement SR1 puisse refroidir le (chaque) onduleur O1,
- b4 (k = 4) le besoin, à l'instant considéré, d'énergie électrique pour que le second système de refroidissement SR2 puisse refroidir la batterie principale BP, et
- b5 (k = 5) le besoin, à l'instant considéré, d'énergie électrique pour que l'installation IC puisse assurer l'aérothermie choisie (éventuellement par un passager du véhicule V) dans l'habitacle H.

Par exemple, les modes d'alimentation électrique du véhicule V peuvent être choisis dans un groupe comprenant :
- un premier mode d'alimentation électrique m1 privilégiant la visibilité dans l'habitacle H pour la sécurité du roulage du véhicule V, et associé à un premier niveau de priorité maximal (car la formation de buée sur le pare-brise et à un moindre niveau sur la lunette arrière doit être empêchée prioritairement),
- un deuxième mode d'alimentation électrique m2 privilégiant la durée de vie des organes électriques Oj et de la batterie principale BP, et associé à un deuxième niveau de priorité inférieur au premier niveau de priorité,
- un troisième mode d'alimentation électrique m3 privilégiant un refroidissement des organes électriques Oj, et associé à un troisième niveau de priorité inférieur au deuxième niveau de priorité, et
- un quatrième mode d'alimentation électrique m4 privilégiant un confort aérothermique dans l'habitacle H, et associé à un quatrième niveau de priorité minimal et inférieur au troisième niveau de priorité.

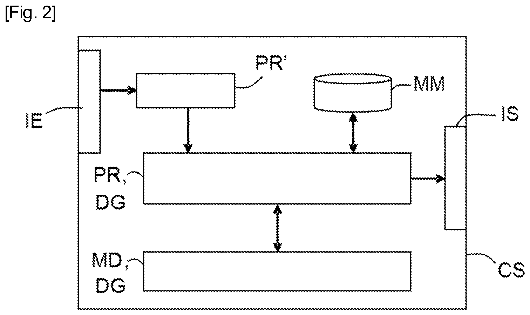

Comme illustré non limitativement sur la figure 2, un dispositif de gestion DG, selon l'invention, comprend au moins un processeur PR et au moins une mémoire MD qui sont agencés pour effectuer des opérations dès que le GMP est mis en fonctionnement.

Ces opérations consistent tout d'abord à déterminer, en fonction des besoins électriques bk des premier SR1 et second SR2 systèmes de refroidissement et de l'installation IC, un prochain mode d'alimentation électrique pm à instaurer en remplacement d'un actuel mode d'alimentation électrique am instauré. Ces opérations consistent ensuite à déterminer une durée de transition dn à imposer avant d'instaurer le prochain mode d'alimentation électrique pm déterminé, en fonction des niveaux de priorité qui sont respectivement associés à cet actuel mode d'alimentation électrique am et à ce prochain mode d'alimentation électrique pm.

Ainsi, la durée de transition (ou temps de confirmation) dn qui doit être imposé(e) avant l'instauration du prochain mode d'alimentation électrique pm varie spécifiquement en fonction de la transition qui doit se produire entre l'actuel mode d'alimentation électrique am et ce prochain mode d'alimentation électrique pm. Cela permet très avantageusement de tenir compte des niveaux de priorité différents des différents modes d'alimentation électrique pouvant être instaurés dans le véhicule V.

On notera que dans l'exemple illustré non limitativement sur les figures 1 et 2, le processeur PR et la mémoire MD font partie du calculateur de supervision CS qui est réalisé sous la forme d'une combinaison de circuits ou composants électriques ou électroniques (ou « hardware ») et de modules logiciels (ou « software »). Mais dans une variante de réalisation (non illustrée) le processeur PR et la mémoire MD pourraient faire partie d'un calculateur qui n'est pas le calculateur de supervision CS et donc assurant au moins une autre fonction au sein du véhicule V. Dans une autre variante de réalisation (non illustrée) le dispositif de gestion DG pourrait comprendre son propre calculateur comportant notamment son processeur PR et sa mémoire MD.

Le processeur PR peut, par exemple, être un processeur de signal numérique (ou DSP (« Digital Signal Processor »)). Ce processeur PR peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique. Ainsi, il peut, par exemple, s'agir d'un microcontrôleur.

La mémoire MD est vive afin de stocker des instructions pour la mise en oeuvre par le processeur PR d'une partie au moins du procédé de gestion décrit plus loin (et donc de ses fonctionnalités).

On notera que le processeur PR et la mémoire MD peuvent être agencés pour effectuer les opérations consistant à prendre en compte les quatre modes d'alimentation électrique m1 à m4 différents, décrits plus haut, et associés respectivement à quatre niveaux de priorité différents.

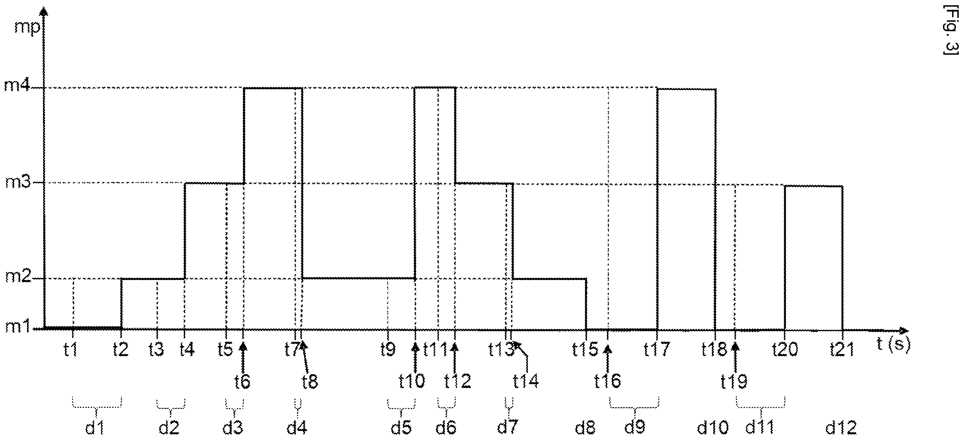

On a schématiquement illustré dans le diagramme de la figure 3 un exemple d'évolution temporelle (t en secondes) du mode d'alimentation électrique mp (ici p = 1 à 4) déterminé par le dispositif de gestion DG en fonction des besoins bk.

Dans cet exemple, c'est le premier mode d'alimentation électrique m1 (p = 1) qui est initialement instauré dans le véhicule V.

A l'instant t1 le dispositif de gestion DG détermine que le deuxième mode d'alimentation électrique m2 (p = 2) doit être instauré. Il impose alors l'instauration d'une première durée de transition (ou temps de confirmation) d1 (n = 1) avant l'instauration de ce deuxième (et prochain) mode d'alimentation électrique m2 = pm. Durant toute cette première durée de transition d1 (qui expire à l'instant t2) l'actuel premier mode d'alimentation électrique m1 = am demeure instauré dans le véhicule V. Puis, à l'instant t2 le dispositif de gestion DG déclenche l'instauration effective du deuxième mode d'alimentation électrique m2 dans le véhicule V.

A l'instant t3 le dispositif de gestion DG détermine que le troisième mode d'alimentation électrique m3 (p = 3) doit être instauré. Il impose alors l'instauration d'une deuxième durée de transition d2 (n = 2) avant l'instauration de ce troisième (et prochain) mode d'alimentation électrique m3 = pm. Durant toute cette deuxième durée de transition d2 (qui expire à l'instant t4) l'actuel deuxième mode d'alimentation électrique m2 = am demeure instauré dans le véhicule V. Puis, à l'instant t4 le dispositif de gestion DG déclenche l'instauration effective du troisième mode d'alimentation électrique m3 dans le véhicule V.

A l'instant t5 le dispositif de gestion DG détermine que le quatrième mode d'alimentation électrique m4 (p = 4) doit être instauré. Il impose alors l'instauration d'une troisième durée de transition d3 (n = 3) avant l'instauration de ce quatrième (et prochain) mode d'alimentation électrique m4 = pm. Durant toute cette troisième durée de transition d3 (qui expire à l'instant t6) l'actuel troisième mode d'alimentation électrique m3 = am demeure instauré dans le véhicule V. Puis, à l'instant t6 le dispositif de gestion DG déclenche l'instauration effective du quatrième mode d'alimentation électrique m4 dans le véhicule V.

A l'instant t7 le dispositif de gestion DG détermine que le deuxième mode d'alimentation électrique m2 doit être instauré. Il impose alors l'instauration d'une quatrième durée de transition d4 (n = 4) avant l'instauration de ce deuxième (et prochain) mode d'alimentation électrique m2 = pm. Durant toute cette quatrième durée de transition d4 (qui expire à l'instant t8) l'actuel quatrième mode d'alimentation électrique m4 = am demeure instauré dans le véhicule V. Puis, à l'instant t8 le dispositif de gestion DG déclenche l'instauration effective du deuxième mode d'alimentation électrique m2 dans le véhicule V.

A l'instant t9 le dispositif de gestion DG détermine que le quatrième mode d'alimentation électrique m4 doit être instauré. Il impose alors l'instauration d'une cinquième durée de transition d5 (n = 5) avant l'instauration de ce quatrième (et prochain) mode d'alimentation électrique m4 = pm. Durant toute cette cinquième durée de transition d5 (qui expire à l'instant t10) l'actuel deuxième mode d'alimentation électrique m2 = am demeure instauré dans le véhicule V. Puis, à l'instant t10 le dispositif de gestion DG déclenche l'instauration effective du quatrième mode d'alimentation électrique m4 dans le véhicule V.

A l'instant t11 le dispositif de gestion DG détermine que le troisième mode d'alimentation électrique m3 doit être instauré. Il impose alors l'instauration d'une sixième durée de transition d6 (n = 6) avant l'instauration de ce troisième (et prochain) mode d'alimentation électrique m3 = pm. Durant toute cette sixième durée de transition d6 (qui expire à l'instant t12) l'actuel quatrième mode d'alimentation électrique m4 = am demeure instauré dans le véhicule V. Puis, à l'instant t12 le dispositif de gestion DG déclenche l'instauration effective du troisième mode d'alimentation électrique m3 dans le véhicule V.

A l'instant t13 le dispositif de gestion DG détermine que le deuxième mode d'alimentation électrique m2 doit être instauré. Il impose alors l'instauration d'une septième durée de transition d7 (n = 7) avant l'instauration de ce deuxième (et prochain) mode d'alimentation électrique m2 = pm. Durant toute cette septième durée de transition d7 (qui expire à l'instant t14) l'actuel troisième mode d'alimentation électrique m3 = am demeure instauré dans le véhicule V. Puis, à l'instant t14 le dispositif de gestion DG déclenche l'instauration effective du deuxième mode d'alimentation électrique m2 dans le véhicule V.

A l'instant t15 le dispositif de gestion DG détermine que le premier mode d'alimentation électrique m1 doit être instauré. Il impose alors l'instauration d'une huitième durée de transition d8 (n = 8) avant l'instauration de ce premier (et prochain) mode d'alimentation électrique m1 = pm. Cette huitième durée de transition d8 est ici nulle et donc « expire » à l'instant t15, et à ce même instant t15 le dispositif de gestion DG déclenche l'instauration effective du premier mode d'alimentation électrique m1 dans le véhicule V.

A l'instant t16 le dispositif de gestion DG détermine que le mode d'alimentation électrique m4 doit être instauré. Il impose alors l'instauration d'une neuvième durée de transition d9 (n = 9) avant l'instauration de ce quatrième (et prochain) mode d'alimentation électrique m4 = pm. Durant toute cette neuvième durée de transition d9 (qui expire à l'instant t17) l'actuel premier mode d'alimentation électrique m1 = am demeure instauré dans le véhicule V. Puis, à l'instant t17 le dispositif de gestion DG déclenche l'instauration effective du quatrième mode d'alimentation électrique m4 dans le véhicule V.

A l'instant t18 le dispositif de gestion DG détermine que le premier mode d'alimentation électrique m1 doit être instauré. Il impose alors l'instauration d'une dixième durée de transition d10 (n = 10) avant l'instauration de ce premier (et prochain) mode d'alimentation électrique m1 = pm. Cette dixième durée de transition d10 est ici nulle et donc « expire » à l'instant t18, et à ce même instant t18 le dispositif de gestion DG déclenche l'instauration effective du premier mode d'alimentation électrique m1 dans le véhicule V.

A l'instant t19 le dispositif de gestion DG détermine que le troisième mode d'alimentation électrique m3 doit être instauré. Il impose alors l'instauration d'une onzième durée de transition d11 (n = 11) avant l'instauration de ce troisième (et prochain) mode d'alimentation électrique m3 = pm. Durant toute cette onzième durée de transition d11 (qui expire à l'instant t20) l'actuel premier mode d'alimentation électrique m1 = am demeure instauré dans le véhicule V. Puis, à l'instant t20 le dispositif de gestion DG déclenche l'instauration effective du troisième mode d'alimentation électrique m3 dans le véhicule V.

A l'instant t21 le dispositif de gestion DG détermine que le premier mode d'alimentation électrique m1 doit être instauré. Il impose alors l'instauration d'une douzième durée de transition d12 (n = 12) avant l'instauration de ce premier (et prochain) mode d'alimentation électrique m1 = pm. Cette douzième durée de transition d12 est ici nulle et donc « expire » à l'instant t21, et à ce même instant t21 le dispositif de gestion DG déclenche l'instauration effective du premier mode d'alimentation électrique m1 dans le véhicule V.

Comme on peut l'observer sur la figure 3, la durée de transition dn varie selon la transition qui doit se produire entre l'actuel mode d'alimentation électrique am et le prochain mode d'alimentation électrique pm. Dans cet exemple non limitatif, plus le niveau de priorité du prochain mode d'alimentation électrique pm est élevé, plus la durée de transition dn qui va précéder ce dernier (pm) est courte car plus on souhaite dans cet exemple que la transition doit se faire rapidement. Cette dernière (dn) peut même, par exemple, être nulle lorsque le prochain mode d'alimentation électrique pm est le premier m1. Inversement, dans cet exemple non limitatif, plus le niveau de priorité de l'actuel mode d'alimentation électrique am est élevé, plus la durée de transition dn qui va précéder le prochain mode d'alimentation électrique (pm) est longue car plus on souhaite dans cet exemple attendre longtemps au cas où les besoins électriques bk nécessiteraient de rester plus longtemps dans l'actuel mode d'alimentation électrique am.

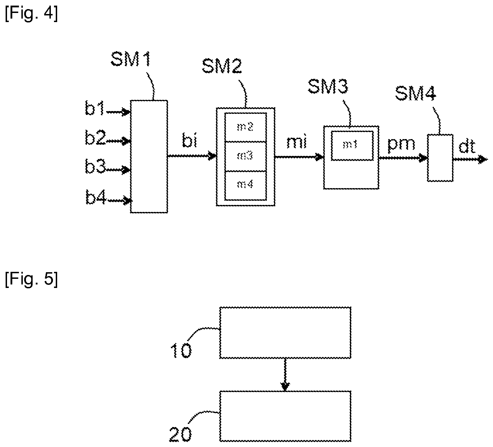

Mais d'autres variations de la durée de transition dn peuvent être envisagées. On notera également, comme illustré fonctionnellement sur la figure 4, que dans un mode de réalisation particulier le processeur PR et la mémoire MD peuvent être agencés pour effectuer les opérations consistant à commencer par déterminer parmi les besoins électriques b1 à b4 des premier SR1 et second SR2 systèmes de refroidissement celui qui est le plus important et que l'on appelle ci-après besoin électrique intermédiaire bi. Cette première détermination est réalisée par un premier sous-module fonctionnel SM1 du dispositif de gestion DG. Puis, ils sont agencés pour effectuer les opérations consistant à déterminer parmi les deuxième m2, troisième m3 et quatrième m4 modes d'alimentation électrique celui qui peut être instauré en présence de ce besoin électrique intermédiaire bi et que l'on appelle ci-après mode intermédiaire mi. Cette deuxième détermination est réalisée par un deuxième sous-module fonctionnel SM2 du dispositif de gestion DG. Puis, ils sont agencés pour effectuer les opérations consistant à déterminer parmi le premier mode d'alimentation électrique m1 et ce mode intermédiaire mi déterminé celui qui peut être instauré en présence du besoin électrique b5 de l'installation IC et qui est le prochain mode d'alimentation électrique pm. C'est en effet l'installation IC qui est chargée de lutter contre la génération de buée, ce qui est capital. Cette troisième détermination est réalisée par un troisième sous-module fonctionnel SM3 du dispositif de gestion DG. Enfin, ils sont agencés pour effectuer les opérations consistant à déterminer la durée de transition dn à imposer avant d'instaurer le prochain mode d'alimentation électrique pm déterminé, en fonction des niveaux de priorité qui sont respectivement associés à l'actuel mode d'alimentation électrique am et à ce prochain mode d'alimentation électrique pm. Cette quatrième détermination est réalisée par un quatrième sous-module fonctionnel SM4 du dispositif de gestion DG.

On notera que le premier sous-module fonctionnel SM1 peut éventuellement être subdivisé en deux ou trois sous-sous-modules. Notamment, on peut d'abord effectuer une comparaison entre les besoins électriques b1 à b3, puis on peut comparer le résultat de cette première comparaison au besoin électriques b4 afin de retenir celui qui est le plus important. De même, le deuxième sous-module fonctionnel SM2 peut éventuellement être subdivisé en deux ou trois sous-sous-modules. Egalement de même, le quatrième sous-module fonctionnel SM4 peut éventuellement être subdivisé en au moins deux sous-sous-modules.

Par exemple, le processeur PR et la mémoire MD peuvent être agencés pour effectuer les opérations consistant à déterminer la durée de transition dn dans une table de correspondance qui établit une correspondance entre des couples d'actuel mode d'alimentation électrique et de prochain mode d'alimentation électrique et des durées de transition. Cette table de correspondance est par exemple déterminée lors d'essais en usine et/ou sur route (ou piste), puis stockée dans le dispositif de gestion DG (par exemple dans sa mémoire MD). Mais dans une variante de réalisation la durée de transition dn pourrait être déterminée à partir d'au moins une équation mathématique déterminée en laboratoire ou en usine.

On notera également, comme illustré non limitativement sur la figure 2, que le calculateur de supervision CS (ou l'éventuel calculateur du dispositif de gestion DG) peut aussi comprendre, en complément des mémoire vive MD et processeur PR, une mémoire de masse MM, notamment pour le stockage des besoins électriques bk, et des données intermédiaires intervenant dans tous ses calculs et traitements (par exemple bi et mi). Par ailleurs, ce calculateur de supervision CS (ou l'éventuel calculateur du dispositif de gestion DG) peut aussi comprendre une interface d'entrée IE pour la réception d'au moins les besoins électriques bk pour les utiliser dans des calculs ou traitements, éventuellement après les avoir mis en forme et/ou démodulés et/ou amplifiés, de façon connue en soi, au moyen d'un processeur de signal numérique PR'. De plus, ce calculateur de supervision CS (ou l'éventuel calculateur du dispositif de gestion DG) peut aussi comprendre une interface de sortie IS, notamment pour délivrer les commandes et ordres d'instauration des durées de transition dn et prochains modes d'alimentation électrique pm à instaurer. L'invention peut aussi être considérée sous la forme d'un procédé de gestion destiné à être mis en oeuvre dans le véhicule V décrit ci-avant afin de permettre la gestion de ses modes d'alimentation électrique.

Ce procédé de gestion comprend une étape 10-20 dans laquelle on détermine en fonction des besoins électriques bk un prochain mode d'alimentation électrique pm à instaurer en remplacement d'un actuel mode d'alimentation électrique am instauré. Puis, cette étape 10-20 se poursuit par la détermination d'une durée de transition dn à imposer avant d'instaurer le prochain mode d'alimentation électrique pm déterminé, en fonction des niveaux de priorité qui sont respectivement associés à ces actuel am et prochain pm modes d'alimentation électrique.

On a schématiquement illustré sur la figure 5 un exemple d'algorithme mettant en oeuvre un procédé de gestion 10-20 selon l'invention.

L'algorithme comprend une sous-étape 10 dans laquelle on détermine en fonction des besoins électriques bk le prochain mode d'alimentation électrique pm à instaurer en remplacement de l'actuel mode d'alimentation électrique am instauré.

Puis, dans une sous-étape 20 on détermine la durée de transition dn à imposer avant d'instaurer le prochain mode d'alimentation électrique pm déterminé, en fonction des niveaux de priorité qui sont respectivement associés à l'actuel mode d'alimentation électrique am et au prochain mode d'alimentation électrique pm.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR, est propre à mettre en oeuvre le procédé de gestion décrit ci-avant pour gérer les modes d'alimentation électrique du véhicule V.

## Revendications

1. Dispositif de gestion (DG) pour un véhicule (V) comprenant un habitacle (H), recevant de l'air traité par une installation de chauffage et/ou climatisation (IC), et un groupe motopropulseur, au moins partiellement électrique et comportant des organes électriques (Oj) associés à un premier système de refroidissement (SR1) et consommant de l'énergie électrique stockée dans une batterie (BP) associée à un second système de refroidissement (SR2), et dans lequel peuvent être instaurés au moins deux modes d'alimentation électrique différents en fonction de besoins électriques desdits premier (SR1) et second (SR2) systèmes de refroidissement et de ladite installation de chauffage et/ou climatisation (IC), **caractérisé en ce qu'**il comprend au moins un processeur (PR) et au moins une mémoire (MD) agencés pour effectuer les opérations consistant à déterminer en fonction desdits besoins électriques un prochain mode d'alimentation électrique à instaurer en remplacement d'un actuel mode d'alimentation électrique instauré, puis une durée de transition à imposer avant d'instaurer ledit prochain mode d'alimentation électrique déterminé, en fonction de niveaux de priorité qui sont respectivement associés à ces actuel et prochain modes d'alimentation électrique.

2. Dispositif selon la revendication 1, **caractérisé en ce que** ledit processeur (PR) et ladite mémoire (MD) sont agencés pour effectuer les opérations consistant à prendre en compte quatre modes d'alimentation électrique différents associés respectivement à quatre niveaux de priorité différents.

3. Dispositif selon la revendication 1 ou 2, **caractérisé en ce que** ledit processeur (PR) et ladite mémoire (MD) sont agencés pour effectuer les opérations consistant à déterminer lesdits modes d'alimentation électrique dans un groupe comprenant un premier mode d'alimentation électrique privilégiant une visibilité dans ledit habitacle (H) pour la sécurité du roulage dudit véhicule (V) et associé à un premier niveau de priorité maximal, un deuxième mode d'alimentation électrique privilégiant une durée de vie desdits organes électriques (Oj) et de ladite batterie (BP) et associé à un deuxième niveau de priorité inférieur audit premier niveau de priorité, un troisième mode d'alimentation électrique privilégiant un refroidissement desdits organes électriques (Oj) et associé à un troisième niveau de priorité inférieur audit deuxième niveau de priorité, et un quatrième mode d'alimentation électrique privilégiant un confort aérothermique dans ledit habitacle (H) et associé à un quatrième niveau de priorité minimal et inférieur audit troisième niveau de priorité.

4. Dispositif selon la revendication 3, **caractérisé en ce que** ledit processeur (PR) et ladite mémoire (MD) sont agencés pour effectuer les opérations consistant à déterminer parmi lesdits besoins électriques des premier (SR1) et second (SR2) systèmes de refroidissement celui qui est le plus important et est ci-après appelé besoin électrique intermédiaire, puis à déterminer parmi lesdits deuxième, troisième et quatrième modes d'alimentation électrique celui qui peut être instauré en présence dudit besoin électrique intermédiaire et est ci-après appelé mode intermédiaire, puis à déterminer parmi ledit premier mode d'alimentation électrique et ledit mode intermédiaire déterminé celui qui peut être instauré en présence du besoin électrique de ladite installation de chauffage et/ou climatisation (IC) et qui est ledit prochain mode d'alimentation électrique.

5. Dispositif selon l'une des revendications 1 à 4, **caractérisé en ce que** plus ledit niveau de priorité du prochain mode d'alimentation électrique est élevé, plus ladite durée de transition qui va précéder ce dernier est courte.

6. Dispositif selon l'une des revendications 1 à 5, **caractérisé en ce que** plus ledit niveau de priorité de l'actuel mode d'alimentation électrique est élevé, plus ladite durée de transition qui va précéder le prochain mode d'alimentation électrique est longue.

7. Dispositif selon l'une des revendications 1 à 6, **caractérisé en ce que** ledit processeur (PR) et ladite mémoire (MD) sont agencés pour effectuer les opérations consistant à déterminer ladite durée de transition dans une table de correspondance établissant une correspondance entre des couples d'actuel mode d'alimentation électrique et de prochain mode d'alimentation électrique et des durées de transition.

8. Véhicule (V) comprenant un habitacle (H), recevant de l'air traité par une installation de chauffage et/ou climatisation (IC), et un groupe motopropulseur, au moins partiellement électrique et comportant des organes électriques (Oj) associés à un premier système de refroidissement (SR1) et consommant de l'énergie électrique stockée dans une batterie (BP) associée à un second système de refroidissement (SR2), et dans lequel peuvent être instaurés au moins deux modes d'alimentation électrique différents en fonction de besoins électriques desdits premier (SR1) et second (SR2) systèmes de refroidissement et de ladite installation de chauffage et/ou climatisation (IC), **caractérisé en ce qu'**il comprend en outre un dispositif de gestion (DG) selon l'une des revendications précédentes.

9. Procédé de gestion pour un véhicule (V) comprenant un habitacle (H), recevant de l'air traité par une installation de chauffage et/ou climatisation (IC), et un groupe motopropulseur, au moins partiellement électrique et comportant des organes électriques (Oj) associés à un premier système de refroidissement (SR1) et consommant de l'énergie électrique stockée dans une batterie (BP) associée à un second système de refroidissement (SR2), et dans lequel peuvent être instaurés au moins deux modes d'alimentation électrique différents en fonction de besoins électriques desdits premier (SR1) et second (SR2) systèmes de refroidissement et de ladite installation de chauffage et/ou climatisation (IC), **caractérisé en ce qu'**il comprend une étape (10-20) dans laquelle on détermine en fonction desdits besoins électriques un prochain mode d'alimentation électrique à instaurer en remplacement d'un actuel mode d'alimentation électrique instauré, puis on détermine une durée de transition à imposer avant d'instaurer ledit prochain mode d'alimentation électrique déterminé, en fonction de niveaux de priorité qui sont respectivement associés à ces actuel et prochain modes d'alimentation électrique.

10. Produit programme d'ordinateur comprenant un jeu d'instructions qui, lorsqu'il est exécuté par des moyens de traitement, est propre à mettre en oeuvre le procédé de gestion selon la revendication 9 pour gérer l'instauration d'au moins deux modes d'alimentation électrique différents dans un véhicule (V) comprenant un habitacle (H), recevant de l'air traité par une installation de chauffage et/ou climatisation (IC), et un groupe motopropulseur, au moins partiellement électrique et comportant des organes électriques (Oj) associés à un premier système de refroidissement (SR1) et consommant de l'énergie électrique stockée dans une batterie (BP) associée à un second système de refroidissement (SR2).

## Patentansprüche

1. Steuervorrichtung (DG) für ein Fahrzeug (V), bestehend aus einem Fahrgastraum (H), der von einer Heiz- und/oder Klimaanlage (IC) behandelte Luft empfängt, und einem Antriebsstrang, der zumindest teilweise elektrisch ist und elektrische Organe (Oj) umfasst, die mit einem ersten Kühlsystem (SR1) verbunden ist und elektrische Energie verbraucht, die in einer Batterie (BP) gespeichert ist, die mit einem zweiten Kühlsystem (SR2) verbunden ist, und in dem mindestens zwei Modi unterschiedlicher Stromversorgung je nach dem elektrischen Bedarf des genannten Systems eingerichtet werden können ersten (SR1) und zweiten (SR2) Kühlsystem und der Heiz- und/oder Klimatisierungsanlage (IC) , **dadurch gekennzeichnet, dass** sie mindestens einen Prozessor (PR) und mindestens einen Speicher (MD) umfasst, der für die Ausführung vorgesehen ist Operationen, die darin bestehen , den Strombedarf zu ermitteln ein nächster Stromversorgungsmodus, der als Ersatz für einen aktuellen Stromversorgungsmodus eingerichtet werden soll, und dann eine Übergangsdauer, die vor der Einrichtung des nächsten bestimmten Stromversorgungsmodus festgelegt werden soll, entsprechend den Prioritätsstufen, die jeweils diesem aktuellen und dem nächsten Stromversorgungsmodus zugeordnet sind.

2. Vorrichtung nach Anspruch 1, **dadurch gekennzeichnet, dass** der Prozessor (PR) und der Speicher (MD) so ausgelegt sind, dass sie die Vorgänge ausführen, die darin bestehen, vier verschiedene Stromversorgungsmodi zu berücksichtigen, die jeweils vier verschiedenen Prioritätsstufen zugeordnet sind.

3. Vorrichtung nach Anspruch 1 oder 2, **dadurch gekennzeichnet, dass** der Prozessor (PR) und der Speicher (MD) so angeordnet sind, dass sie die folgenden Operationen ausführen: Bestimmen der Stromversorgungsmodi in einer Gruppe, bestehend aus einem ersten Stromversorgungsmodus, der die Sicht im Fahrgastraum (H) für die Sicherheit des Fahrens des Fahrzeugs (V) begünstigt, und einem zweiten Stromversorgungsmodus, der mit einer ersten maximalen Prioritätsstufe verbunden ist Begünstigen einer Lebensdauer der elektrischen Komponenten (Oj) und der Batterie (BP) und verbunden mit einer zweiten Prioritätsstufe, die niedriger ist als die erste Prioritätsstufe, wobei ein dritter Modus der Stromversorgung die Kühlung der elektrischen Komponenten (Oj) begünstigt und verbunden ist mit a eine dritte Prioritätsstufe, die niedriger als die zweite Prioritätsstufe ist, und einen vierten elektrischen Leistungsmodus, der den aerothermischen Komfort in dem Fahrgastraum (H) begünstigt und mit einer vierten Mindestprioritätsstufe verbunden ist, die niedriger als die dritte Prioritätsstufe ist.

4. Vorrichtung nach Anspruch 3, **dadurch gekennzeichnet, dass** der Prozessor (PR) und der Speicher (MD) so angeordnet sind, dass sie die Vorgänge ausführen, die darin bestehen, unter den elektrischen Anforderungen des ersten (SR1) und des zweiten (SR2) Kühlsystems zu bestimmen, welches davon ist der wichtigste und im Folgenden als mittlerer elektrischer Bedarf bezeichnete Strombedarf, dann unter dem zweiten, dritten und vierten Stromversorgungsmodus denjenigen zu bestimmen, der bei Vorliegen des mittleren elektrischen Bedarfs hergestellt werden kann und im Folgenden als mittlerer Strombedarf bezeichnet wird, und dann unter diesen zu bestimmen wobei der erste Stromversorgungsmodus und der bestimmte Zwischenmodus derjenige sind, der bei Vorhandensein des Strombedarfs der Heiz- und/oder Klimaanlage (IC) eingerichtet werden kann und der der nächste Stromversorgungsmodus ist.

5. Vorrichtung nach einem der Ansprüche 1 bis 4, **dadurch gekennzeichnet, dass** die Übergangsdauer, die diesem vorausgeht, umso kürzer ist, je höher die Prioritätsstufe des nächsten Stromversorgungsmodus ist.

6. Vorrichtung nach einem der Ansprüche 1 bis 5, **dadurch gekennzeichnet, dass** die Übergangsdauer vor dem nächsten Stromversorgungsmodus umso länger ist, je höher die Prioritätsstufe des aktuellen Stromversorgungsmodus ist.

7. Vorrichtung nach einem der Ansprüche 1 bis 6, **dadurch gekennzeichnet, dass** der Prozessor (PR) und der Speicher (MD) so ausgelegt sind, dass sie die Operationen ausführen, die darin bestehen, die Dauer des Übergangs in einer Entsprechungstabelle zu bestimmen, die eine Entsprechung zwischen den aktuellen Leistungsmodi und den Paaren herstellt nächster Leistungsmodus und Übergangszeiten.

8. Fahrzeug (V), umfassend einen Fahrgastraum (H), der von einer Heiz- und/oder Klimaanlage (IC) behandelte Luft empfängt, und einen Antriebsstrang, der zumindest teilweise elektrisch ist und elektrische Komponenten (Oj) umfasst, die einem ersten Kühlsystem zugeordnet sind (SR1) und verbraucht elektrische Energie, die in einer Batterie (BP) gespeichert ist, die mit einem zweiten Kühlsystem (SR2) verbunden ist, und in dem je nach elektrischem Bedarf des ersten (SR1) und des zweiten (SR2) mindestens zwei verschiedene Stromversorgungsmodi eingerichtet werden können Kühlsystemen und der Heiz- und/oder Klimaanlage (IC), **dadurch gekennzeichnet, dass** sie außerdem eine Steuerungsvorrichtung (DG) nach einem der vorhergehenden Ansprüche umfasst.

9. Managementverfahren für ein Fahrzeug (V), das einen Fahrgastraum (H) umfasst, der von einer Heiz- und/oder Klimaanlage (IC) behandelte Luft empfängt, und einen Antriebsstrang, der zumindest teilweise elektrisch ist und elektrische Komponenten (Oj) umfasst, die mit a verbunden sind erstes Kühlsystem (SR1) und verbraucht elektrische Energie, die in einer Batterie (BP) gespeichert ist, die mit einem zweiten Kühlsystem (SR2) verbunden ist, und in dem mindestens zwei Stromversorgungsmodi eingerichtet werden können, abhängig von den elektrischen Anforderungen des ersten (SR1) und zweiten (SR2) Kühlsystemen und der Heiz- und/oder Klimaanlage (IC), **dadurch gekennzeichnet, dass** es einen Schritt (10-20) umfasst, in dem wir den elektrischen Bedarf bestimmen ein nächster Stromversorgungsmodus, der als Ersatz für einen aktuell eingerichteten Stromversorgungsmodus eingerichtet werden soll, dann wird eine Übergangsdauer bestimmt, die vor der Einrichtung des nächsten bestimmten Stromversorgungsmodus auferlegt werden soll, als Funktion der Prioritätsstufen, die jeweils diesen aktuellen Stromversorgungsmodi zugeordnet sind Nächste Stromversorgungsmodi.

10. Computerprogrammprodukt, das einen Satz von Anweisungen umfasst, der bei Ausführung durch Verarbeitungsmittel in der Lage ist, das Verwaltungsverfahren nach Anspruch 9 zu implementieren, um die Einrichtung von mindestens zwei unterschiedlichen Betriebsmodi in einem Fahrzeug (V) zu verwalten, umfassend: a Fahrgastraum (H), der von einer Heiz- und/oder Klimaanlage (IC) behandelte Luft empfängt, und einen Antriebsstrang, der zumindest teilweise elektrisch ist und elektrische Komponenten (Oj) umfasst, die einem ersten Kühlsystem (SR1) zugeordnet sind und elektrische Energie verbrauchen in einer Batterie (BP) gespeichert, die mit einem zweiten Kühlsystem (SR2) verbunden ist.

## Claims

1. Management device (DG) for a vehicle (V) comprising a passenger compartment (H), receiving air treated by a heating and/or air conditioning installation (IC), and a powertrain, at least partially electric and comprising electrical organs (Oj) associated with a first cooling system (SR1) and consuming electrical energy stored in a battery (BP) associated with a second cooling system (SR2), and in which at least two modes can be established different power supplies depending on the electrical needs of said first (SR1) and second (SR2) cooling systems and of said heating and/or air conditioning installation (IC), **characterized in that** it comprises at least one processor (PR) and at least one memory (MD) arranged to carry out the operations consisting of determining according to said electrical needs a next power supply mode to be established in replacement of a current power supply mode established, then a transition duration to be imposed before establishing said next determined power supply mode, according to priority levels which are respectively associated with these current and next power supply modes.

2. Device according to claim 1, **characterized in that** said processor (PR) and said memory (MD) are arranged to carry out the operations consisting of taking into account four different power supply modes associated respectively with four different priority levels.

3. Device according to claim 1 or 2, **characterized in that** said processor (PR) and said memory (MD) are arranged to carry out the operations consisting of determine said electrical power supply modes in a group comprising a first electrical power supply mode favoring visibility in said passenger compartment (H) for the safety of driving said vehicle (V) and associated with a first maximum priority level, a second mode of electrical supply favoring a lifespan of said electrical components (Oj) and of said battery (BP) and associated with a second priority level lower than said first priority level, a third mode of electrical supply favoring cooling of said electrical components (Oj) and associated with a third priority level lower than said second priority level, and a fourth electrical power mode favoring aerothermal comfort in said passenger compartment (H) and associated with a fourth minimum priority level and lower than said third level priority .

4. Device according to claim 3, **characterized in that** said processor (PR) and said memory (MD) are arranged to carry out the operations consisting of determining among said electrical requirements of the first (SR1) and second (SR2) cooling systems which one is the most important and is hereinafter called intermediate electrical need , then to determine among said second, third and fourth modes of electrical supply the one which can be established in the presence of said intermediate electrical need and is hereinafter called intermediate mode, then to determine among said first electrical supply mode and said determined intermediate mode the one which can be established in the presence of the electrical need of said heating and/or air conditioning installation (IC) and which is said next electrical supply mode.

5. Device according to one of claims 1 to 4, **characterized in that** the higher said priority level of the next power supply mode is, the shorter said transition duration which will precede the latter.

6. Device according to one of claims 1 to 5, **characterized in that** the higher said priority level of the current power supply mode, the longer said transition duration which will precede the next power supply mode.

7. Device according to one of claims 1 to 6, **characterized in that** said processor (PR) and said memory (MD) are arranged to carry out the operations consisting of determining said transition duration in a correspondence table establishing a correspondence between couples current power mode and next power mode and transition times.

8. Vehicle (V) comprising a passenger compartment (H), receiving air treated by a heating and/or air conditioning installation (IC), and a powertrain, at least partially electric and comprising electrical components (Oj) associated with a first cooling system (SR1) and consuming electrical energy stored in a battery (BP) associated with a second cooling system (SR2), and in which at least two different electrical supply modes can be established depending on electrical needs of said first (SR1) and second (SR2) cooling systems and of said heating and/or air conditioning installation (IC), **characterized in that** it further comprises a management device (DG) according to one of the previous claims.

9. Management method for a vehicle (V) comprising a passenger compartment (H), receiving air treated by a heating and/or air conditioning installation (IC), and a powertrain, at least partially electric and comprising electrical components (Oj) associated with a first cooling system (SR1) and consuming electrical energy stored in a battery (BP) associated with a second cooling system (SR2), and in which at least two power supply modes can be established electrical requirements depending on the electrical needs of said first (SR1) and second (SR2) cooling systems and of said heating and/or air conditioning installation (IC), **characterized in that** it comprises a step (10-20) in which we determine according to said electrical needs a next power supply mode to be established in replacement of a current power supply mode established, then a transition duration to be imposed before establishing said next determined power supply mode is determined, as a function of priority levels which are respectively associated with these current and next power supply modes.

10. Computer program product comprising a set of instructions which, when executed by processing means, is capable of implementing the management method according to claim 9 to manage the establishment of at least two modes of operation, different electrical supplies in a vehicle (V) comprising a passenger compartment (H), receiving air treated by a heating and/or air conditioning installation (IC), and a powertrain, at least partially electric and comprising electrical components (Oj) associated with a first cooling system (SR1) and consuming electrical energy stored in a battery (BP) associated with a second cooling system (SR2).
